# EUROPEAN PATENT SPECIFICATION

(11) **EP 1 347 522 B1**
(45) Date of publication and mention of the grant of the patent: **25.07.2007**
(21) Application number: 03005904.2
(22) Date of filing: 17.03.2003
(51) Int. Cl.: H01M 2/30

(54) **A connector terminal for a battery**
Kabelanschlussklemme für Batteriepol
Connecteur pour borne terminale de batterie

(30) Priority: 20.03.2002 IT TO20020251
(43) Date of publication of application: 24.09.2003
(73) Proprietor: I.C.S. Industria Composizioni Stampate S.p.A., 24058 Romano Di Lombardia (Bergamo) (IT)
(72) Inventor: Presciani,Angelo, 24044 Dalmine (Bergamo) (IT)
(74) Representative: Rambelli, Paolo

(56) References cited:
- EP-A- 0 590 284
- EP-A- 0 601 268
- EP-A- 0 836 237
- DE-B- 1 146 149
- GB-A- 1 236 495
- US-A- 5 364 714

## Description

The present invention relates to a connector terminal also commonly known as a positive or negative battery pole, particularly for a lead-acid battery.

More precisely, the invention relates to a connector terminal of the type comprising a generally conical head portion to be connected to an electrical circuit and a base portion to be incorporated in a leaktight manner in the plastics material of the battery lid, the base portion having an annular wall including a section having an undulating radially outer circumferential profile suitable for achieving a torsion seal and a tubular section having a labyrinthine radially outer longitudinal profile.

During the battery-production process, the connector terminals are anchored to the battery lid by a co-moulding technique by incorporating the base portion of the connector in the molten plastics material which then sets.

The problem posed is that of achieving maximum adhesion between the plastics material and the connector. The anchorage must be such as to ensure leaktightness under predetermined torsional tensile loads that are set by the battery manufacturers' technical specifications; moreover, the adhesion must be such as to eliminate as far as possible the possibility of infiltrations of acid between the plastics material and the surface of the connector, both of acid from inside the battery and from outside, in which case the acid concerned is acid spilt on the battery lid during filling.

According to the specifications, sulphuric acid with a density of 1.28 kg/l may enter between the two parts that are in contact but must not pass the limits of penetration that are well defined by the specifications.

If acid from inside the battery manages to pass towards the exterior or if acid from outside manages to pass towards the interior by passing along the wall which joins the plastics material to the terminals, the terminals inevitably oxidize, which is detrimental to the correct operation and life of the battery, and cannot be tolerated.

To improve adhesion and to conform to the specifications, it has been suggested that the base portion of the connector, which is incorporated in the plastics material in order to achieve the seal, be immersed in certain adhesives, or that this portion be spray-coated with ceramic materials.

Another solution that is adopted is that of rendering the surfaces of the terminals mirror-like to reduce surface roughness to the minimum.

On the basis of tests performed by the Applicant, however, it has been found that there is no connector terminal available on the market which responds to the dual requirement not to permit penetration of acid in either of the two directions, that is, neither from the exterior to the interior nor from the interior to the exterior.

There is therefore still a need to provide a connector terminal suitable for solving the above-mentioned technical problem.

A design feature that is common to connector terminals which are currently available on the market and which have the structural characteristics defined above is that the above-mentioned section of the base portion that has an undulating circumferential profile, also known as a star-shaped profile, is positioned at the base of the conical head portion and is interposed between the conical head portion and the tubular section with a labyrinthine longitudinal profile.

The present invention is based on the recognition of the fact that the above-described geometrical arrangement, which is used to ensure leaktightness in the torsion test and in the acid infiltration test required by the specifications, does not allow maximum adhesion to be achieved between the parts that are in contact, allowing acid nevertheless to infiltrate.

It can be assumed that the infiltration of acid is due to the fact that the star shape produces an obstacle to the uniform shrinkage of the plastics material, which consequently creates a differentiated pressure on the surfaces of the connector that are incorporated in the plastics material and, in particular, between the radially outermost peripheral surfaces of the star-shaped section and the radially innermost peripheral surfaces; similarly, a difference in pressure arises between the radially outer and inner peripheral surfaces of the tubular section with a labyrinthine profile; the pressure value changes significantly.

The mechanical adhesion of the plastics material to the connector terminal is greatest on the outer wall of the star-shaped section and of the tubular section, whereas the adhesion to the inner surfaces is cancelled out, since the outer portion of the star-shaped section does not allow the plastics material to shrink towards the centre but, on the contrary, forces it to shrink outwards.

The seal exerted by the outer surfaces leads to detachment of the plastics material from the inner surfaces, creating the conditions for allowing acid to infiltrate.

The acid which infiltrates remains in the interstices even after careful washing. Similarly, the shape of the labyrinthine tubular section disposed below the star-shaped section causes the plastics material to adhere to the tops of the annular ribs, detaching it from the grooves and reducing the surface that is actually sealed to a few millimetres.

EP-A-0836 237 describes a connector terminal according to the pre-characterising part of claim 1.

To overcome the problems and disadvantages of the prior art connector, the subject of the invention is a connector terminal having the characteristics mentioned in the characterising part of claim 1.

Further advantages and characteristics of the connector terminal according to the invention will become clear from the following detailed description which is given with reference to the appended drawings, in which:
Figure 1 is an axial section through a connector terminal according to the invention, secured in the plastics material of a battery lid,
Figure 2 is a view of the connector of Figure 1 from above,
Figure 3 is a section through the detail indicated by the arrow III in Figure 1, and
Figure 4 is a detailed view of a further embodiment of the detail of Figure 3.

In the appended drawings, a connector terminal, for example, constituting the positive terminal of a battery, is generally indicated 2; the following description is intended also to apply in just the same way to the geometrical arrangement of a connector constituting the negative pole.

The connector comprises a generally frustoconical head portion 4 and a base portion 6 which is incorporated in the plastics material P of a battery lid.

The base portion 6 comprises a first circular ring-shaped section 8 having a circular, mirror-like cylindrical lateral surface.

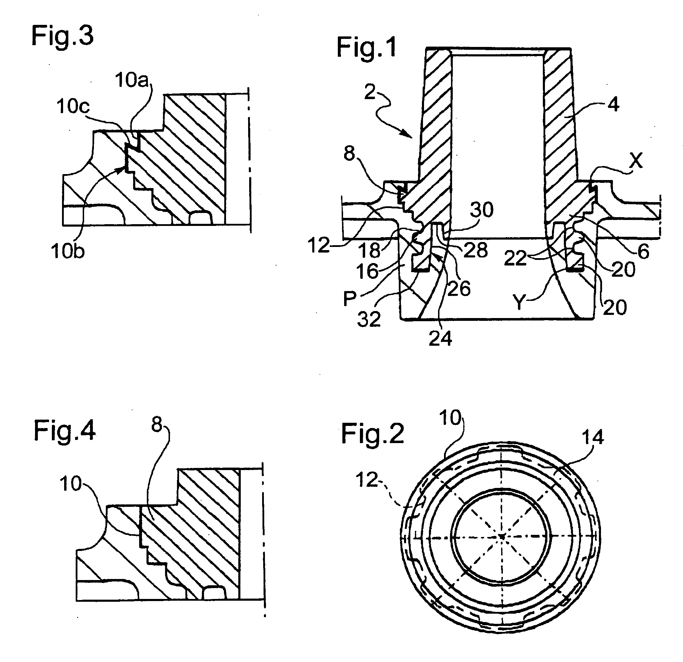

In the preferred embodiment (Figures 1 and 3), the above-mentioned ring-shaped section 8 has a sawtooth-shaped longitudinal profile with circular cylindrical lateral surfaces 10a and 10b connected by an inclined annular surface 10c, preferably inclined at about 30° to a horizontal plane.

According to another embodiment (Figure 4), the above-mentioned ring-shaped section has a straight longitudinal profile with a circular cylindrical lateral surface 10.

With reference to the standard dimensions of a battery-connector terminal, the above-mentioned ring-shaped section typically has a height of 2.5-3 mm, preferably about 2.7 mm.

It has been found that the above-mentioned circular ring-shaped section enables the plastics material to adhere in a mirror-like manner to the polished surface of the connector which is preferably produced by the coining, at a pressure of 180 bar, of a rough connector produced by gravity casting; moreover, the circular shape enables the hot plastics material to exert a concentric and uniform pressure on the peripheral surface 10, through 360°, during shrinkage (shrinkage value from 1.2% mm to 2.0% mm).

The preferred sawtooth-shaped profile restrains the plastics material adhering to the ring and resists the expansion of the ring which occurs - although to a marginal extent - during the battery-forming process because of the increase in the temperature of the electrolyte.

Below the ring-shaped section 8, the base portion 6 comprises a section 12 with an undulating or star-shaped radially outer circumferential profile having a plurality of angularly spaced-apart projections or teeth 14; the star-shaped section 12 has a maximum radial dimension smaller than the maximum radial dimension of the circular ring-shaped section 8.

It shall be appreciated that the configuration of the teeth 14 may widely be changed with respect to that shown; the position of the star-shaped section below the ring-shaped section in any case enables the plastics material to be anchored better to the surface of the connector, achieving the maximum resistance to torsion, even with receded teeth.

The described position of the star-shaped section also confers greater stability on the coupling and hence greater resistance to the force produced by the application of a torsional load.

The above-mentioned section with a star-shaped circumferential section is thus interposed between the ring-shaped section 8 and a tubular section 16 which has a labyrinthine longitudinal profile 18 defined by annular ribs 20 connected by grooves 22.

The tubular section 16 preferably has a maximum radial dimension smaller than the maximum radial dimension of the star-shaped section.

According to a characteristic of the invention, the above-mentioned tubular section 16 also has a labyrinthine radially inner longitudinal profile 24

In the currently-preferred embodiment, this labyrinthine profile comprises a straight portion 26 and at least one loop-shaped portion 28 having its concave side facing towards the lower end of the connector, defining an internal collar 30.

The lower end of the connector is preferably defined by an annular surface 32 which preferably lies in a horizontal plane, as shown.

It shall be appreciated that the labyrinthine profile may be changed with respect to that specifically described; however, as well as extending the adhesion surface, which is almost doubled - the shape conferred on the internal labyrinth preferably has extended linear surfaces and is preferably polished like a mirror.

The mirror-like surface and the particular shape of the labyrinth favour an improved seal between the plastics material and the surface of the connector, reducing acid infiltration to the minimum.

The method for the production of the connector terminal according to the invention comprises the step of forming a rough casting and the step of sizing to confer the final shape thereon.

The rough terminals are preferably produced by a process which provides for the fusion of the lead in suitable 900 kg NIARD cast-iron crucibles at a temperature of 400°C.

By way of example, a preferred lead alloy has the following composition:

| **Composition** | **% for parallelepipeds** |
|---|---|
| antimony | 4.25-4.75 |
| arsenic | 0.10-0.25 |
| silver | 0.002-0.010 |
| tin | 0.001-0.010 |
| copper | < 0.050 |
| bismuth | < 0.035 |
| nickel | < 0.02 |
| sulphur | < 0.002 |
| iron | < 0.001 |
| zinc | < 0.001 |
| cadmium | < 0.001 |

The moulding machine combined with the crucible is constituted substantially by a rotary disc, in the upper portion of which a channel has been formed for receiving the molten lead coming from the crucible.

From this channel, the molten lead reaches - again by gravity - the moulds to be filled which are disposed below the pouring channel; the sprue which remains in the pouring channel is automatically recovered by a conveyor which returns it to the crucible, whilst the rough terminals are collected in containers disposed at the base of the separation device.

This process enables the content of gas incorporated in the rough casting to be reduced to levels that are insignificant from the quantitative point of view and to a much lower level than in other systems such as injection under vacuum or drawing.

The inclusion of gases in the terminals creates considerable problems during the welding between the terminals of the plates and the battery terminals; the gas heated by the flame may explode, spraying molten lead and rendering the weld unstable and of poor quality, compromising its correct functional capacity.

The rough casting thus produced is subsequently processed in a sizing machine suitable for conferring on the finished piece the maximum compactness and the dimensional shape. The sizing machine, hereinafter referred to as a coining machine, performs a dual function.

The coining machine is formed substantially by a rotary table on which the processing apparatus which confers the final shape on the terminals is housed. The processing takes place without the removal of material but by compression; this solution enables the lead to be compressed at a specific pressure of 34 kg/mm². This pressure value renders the surfaces of the poles mirror-like and hence suitable for achieving maximum adhesion of the plastics material (polypropylene) to the terminals.

The connector terminals according to the invention (in particular according to Figure 1 and produced by the method described above) have been subjected to leaktightness tests in accordance with the technical specifications set by the manufacturers.

In particular, the torsion test was passed without yielding at a torsional load of 2 kg/m. The limits of acceptability were also exceeded in the acid infiltration test in which, by virtue of the presence of the circular ring-shaped section, there was absolutely no infiltration at all.

The outer surface of the labyrinth disposed between the points indicated X and Y in Figure 1 was also perfectly clean and bright.

## Claims

1. A connector terminal (2) for a battery, comprising:
- a head portion (4) to be connected to an electrical circuit and
- a base portion (6) to be incorporated in a plastics material of the battery lid, the base portion (6) having an annular wall including a section (12) having an undulating radially outer circumferential profile (14), wherein the base portion (6) further comprises at least one circular ring-shaped section (8) interposed between the head portion (4) and the section with the undulating circumferential profile (12),
**characterised in that** the base portion comprises a terminal tubular section (16) having a labyrinthine radially inner longitudinal profile (24) and a labyrinthine radially outer longitudinal profile (18) and **in that** said section having an undulating radially outer circumferential profile (14) has a maximum radial dimension smaller than the maximum radial dimension of the circular ring-shaped section (8).

2. A connector terminal according to Claim 1, **characterized in that** the at least one circular ring-shaped section (8) has a sawtooth-shaped longitudinal profile (10a, 10b, 10c).

3. A connector terminal according to Claim 1 or Claim 2, **characterized in that** the circular ring-shaped section (8) comprises a first circular cylindrical lateral surface (10a) and a second circular cylindrical lateral surface (10b) connected by an inclined annular surface (10c).

4. A connector terminal according to any one of Claims 1 to 3, **characterized in that** the labyrinthine inner longitudinal profile (24) of the tubular section (16) comprises at least one loop (28) with its concave side facing towards the end of the base portion (6) remote from the head portion (4).

5. A connector terminal according to any one of the preceding claims, **characterized in that** the labyrinthine inner longitudinal profile (24) comprises a substantially straight radially inner surface (26) connected to a loop (28) the inner side of which defines an inner collar (30).

6. A connector terminal according to any one of the preceding claims, **characterised in that** the inner and outer lateral surfaces of the base portion (6) are polished like mirrors.

7. A connector terminal according to any one of the preceding claims, **characterized in that** it can be produced by a fusion and gravity casting process to produce a rough casting, and by subsequent coining by compression.

8. A battery, particularly a lead-acid battery, comprising a connector terminal according to any one of the preceding claims.

## Patentansprüche

1. Polklemme (2) für eine Batterie, wobei die Polklemme enthält:
einen Kopfteil (4), der mit einem Stromkreis verbunden werden soll, und
einen Basisteil (6), der in einem Kunststoff der Batterieabdeckung eingeschlossen werden soll, wobei der Basisteil (6) eine ringförmige Wand besitzt, die einen Teil (12) aufweist, der ein gewelltes, radial außen liegendes Umfangsprofil (14) besitzt, wobei der Basisteil (6) weiters zumindest einen kreisringförmigen Teil (8) enthält, der zwischen dem Kopfteil (4) und dem Teil mit dem gewelltes Umfangsprofil (12) angeordnet ist,
**dadurch gekennzeichnet, dass** der Basisteil einen rohrförmigen Klemmenteil (16) besitzt, der ein labyrinthartiges, radial innen liegendes Längsprofil (24) sowie ein labyrinthartiges, radial außen liegendes Längsprofil (18) aufweist, und dass der Teil, der ein gewelltes, radial außen liegendes Umfangsprofil (14) besitzt, eine maximale Radialabmessung aufweist, die kleiner als die maximale Radialabmessung des kreisringförmigen Teils (8) ist.

2. Polklemme gemäß Anspruch 1, **dadurch gekennzeichnet, dass** der zumindest eine kreisringförmige Teil (8) ein sägezahnförmiges Längsprofil (10a, 10b, 10c) aufweist.

3. Polklemme gemäß Anspruch 1 oder Anspruch 2, **dadurch gekennzeichnet, dass** der kreisringförmige Teil (8) eine erste kreiszylinderförmige Seitenfläche (10a) sowie eine zweite kreiszylinderförmige Seitenfläche (10b) umfasst, die über eine schräge ringförmige Fläche (10c) verbunden sind.

4. Polklemme gemäß irgendeinem der Ansprüche 1 bis 3, **dadurch gekennzeichnet, dass** das labyrinthartige, innere Längsprofil (24) des rohrförmigen Teils (16) zumindest eine Schleife (28) umfasst, die mit ihrer konkaven Seite zu jenem Ende des Basisteils (6) gerichtet ist, das vom Kopfteil (4) entfernt liegt.

5. Polklemme gemäß irgendeinem der bisherigen Ansprüche, **dadurch gekennzeichnet, dass** das labyrinthartige, innere Längsprofil (24) eine im Wesentlichen gerade, radial innen liegende Fläche (26) umfasst, die mit einer Schleife (28) verbunden ist, deren Innenseite einen inneren Hals (30) bildet.

6. Polklemme gemäß irgendeinem der bisherigen Ansprüche, **dadurch gekennzeichnet, dass** die inneren und die äußeren Seitenflächen des Basisteils (6) spiegelartig poliert sind.

7. Polklemme gemäß irgendeinem der bisherigen Ansprüche, **dadurch gekennzeichnet, dass** die Polklemme in einem Schmelz- und Standgussvorgang, um ein Rohgussstück herzustellen, und in einem nachfolgenden Prägevorgang durch Komprimieren hergestellt werden kann.

8. Batterie, im Besonderen eine Bleisäure-Batterie, wobei die Batterie eine Polklemme gemäß irgendeinem der bisherigen Ansprüche umfasst.

## Revendications

1. Borne de connexion (2) pour une batterie, comprenant:
- une partie de tête (4) à connecter à un circuit électrique et
- une partie de base (6) à incorporer dans un matériau en plastique de la partie supérieure de la batterie, la partie de base (6) ayant une paroi annulaire comprenant une section (12) ayant un profil périphérique extérieur ondulant radialement (14), dans laquelle la partie de base (6) comprend en outre au moins une section circulaire en forme d'anneau (8) intercalée entre la partie de tête (4) et la section munie du profil périphérique ondulant (12), **caractérisée en ce que** la partie de base comprend une section tubulaire terminale (16) ayant un profil longitudinal intérieur à labyrinthe radialement (24) et un profil longitudinal extérieur à labyrinthe radialement (18) et **en ce que** ladite section ayant un profil périphérique extérieur ondulant radialement (14) a une dimension radiale maximale inférieure à la dimension radiale maximale de la section circulaire en forme d'anneau (8).

2. Borne de connexion selon la revendication 1, **caractérisée en ce que** cette au moins première section circulaire en forme d'anneau (8) a un profil longitudinal en dent de scie (10a, 10b, 10c).

3. Borne de connexion selon la revendication 1 ou la revendication 2, **caractérisée en ce que** la section circulaire en forme d'anneau (8) comprend une première surface latérale cylindrique (10a) et une deuxième surface latérale cylindrique (10b) connectées par une surface annulaire inclinée (10c).

4. Borne de connexion selon l'une quelconque des revendications 1 à 3, **caractérisée en ce que** le profil longitudinal intérieur à labyrinthe (24) de la section tubulaire (16) comprend au moins une boucle (28) avec son côté concave orienté en direction de l'extrémité de la partie de base (6) éloignée de la partie de tête (4).

5. Borne de connexion selon l'une quelconque des revendications précédentes, **caractérisée en ce que** le profil longitudinal intérieur à labyrinthe (24) comprend une surface intérieure sensiblement droite radialement (26) reliée à une boucle (28) dont le côté intérieur définit un collier intérieur (30).

6. Borne de connexion selon l'une quelconque des revendications précédentes, **caractérisée en ce que** les surfaces latérales intérieure et extérieure de la partie de base (6) sont polies comme des miroirs.

7. Borne de connexion selon l'une quelconque des revendications précédentes, **caractérisée en ce qu'**elle peut être produite par un processus de moulage par fusion et gravité afin de produire un moulage grossier, et par matriçage ultérieur par compression.

8. Batterie, en particulier batterie plomb-acide, comprenant une borne de connexion selon l'une quelconque des revendications précédentes.
